# EUROPÄISCHE PATENTSCHRIFT

(11) **EP 1 996 642 B1**
(45) Veröffentlichungstag und Bekanntmachung des Hinweises auf die Patenterteilung: **26.05.2010**
(21) Anmeldenummer: 07702774.6
(22) Anmeldetag: 16.01.2007
(51) Int. Cl.: C08G 59/62, C09D 163/00, H01F 1/00

(54) **LACKZUSAMMENSETZUNG, INSBESONDERE KORROSIONSSCHUTZLACK FÜR SELTENERD-DAUERMAGNETE**
PAINT COMPOSITION, IN PARTICULAR ANTI-CORROSIVE PAINT FOR RARE EARTH PERMANENT MAGNETS
COMPOSITION POUR VERNIS, EN PARTICULIER VERNIS ANTI-CORROSIF POUR DES AIMANTS PERMANENTS À BASE DE TERRES RARES

(30) Priorität: 21.03.2006 DE 102006012839
(43) Veröffentlichungstag der Anmeldung: 03.12.2008
(73) Patentinhaber: Vacuumschmelze GmbH & Co. KG, 63450 Hanau (DE)
(72) Erfinder: ZAPF, Lothar, 63755 Alzenau (DE)
(74) Vertreter: Patentanwälte Westphal, Mussgnug & Partner
(86) Internationale Anmeldenummer: PCT/EP2007/000308
(87) Internationale Veröffentlichungsnummer: WO 2007/107192

(56) Entgegenhaltungen:
- DE-A- 2 700 363
- US-A- 3 474 073
- US-A- 5 418 265

## Beschreibung

Die vorliegende Erfindung betrifft eine Lackzusammensetzung, insbesondere einen Korrosionsschutzlack für Seltenerd-Dauermagnete, auf Basis einer Epoxidharzmischung, eines Härtungsbeschleunigers, eines epoxyfunktionellen Haftvermittlers auf Silanbasis sowie eines Lösungsmittels.

Magnete und Magnetsysteme, insbesondere solche, die NdFeB-Magnete enthalten, müssen in der Regel vor Korrosion geschützt werden. Dies erfordert eine entsprechende Beschichtung, z.B. eine Lackierung.

Im Aufbau von Magnetsystemen werden Magnete untereinander und/oder mit anderen Werkstücken, wie z. B. Stahlrückschlüssen oder anderen weichmagnetischen Werkstücken, klebetechnisch verbunden. Dabei wird von der Klebeverbindung gefordert, dass sie eine hohe Festigkeit, vorzugsweise ≥ 10 N/mm² in Verbindung mit einer hohen Temperaturbeständigkeit aufweist. So treten z.B. bei Anwendungen in Motoren Temperaturen bis zu 180°C auf und es wirken hohe Gegenfelder auf die Magnete ein. Diesen Bedingungen muss die Klebung standhalten.

Bei den sogenannten segmentierten Magnetsystemen, die aus mehreren Einzelmagneten zusammengesetzt sind, wird das System durch Kleben fixiert und zusammengehalten. Der ausgehärtete Klebstofffilm hat darüber hinaus die Funktion, die Einzelmagnete gegeneinander elektrisch zu isolieren. Eine gute elektrische Isolierung ist erforderlich, da solche Systeme in elektrisch arbeitenden Großmaschinen, wie z. B. Schiffsmotoren, Windgeneratoren etc. eingesetzt werden und die elektrische Isolation der Einzelmagnete das Auftreten hoher Wirbelströme und damit das Überhitzen des Motors verhindert.

Bei Herstellung von Magnetsystemen geht man üblicherweise so vor, dass die Magnete mit Hilfe von flüssigen Hochleistungsklebstoffen, wie z. B. Epoxidharzen, Acrylaten etc., verklebt werden. Anschließend werden die Magnetsysteme mit einem Korrosionsschutz beschichtet, um die Systeme vor Umwelt und Chemikalieneinflüssen zu schützen. In der Regel wird hierzu ein Einbrennlack benutzt, wobei jedoch häufig das Problem auftritt, dass im Bereich des Klebespaltes Lackfehlstellen auftreten, die durch eingeschlossene Gas- bzw. Luftblasen hervorgerufen werden.

Dieses Problem lässt sich dadurch umgehen, dass man den Korrosionsschutz vor dem Verkleben aufbringt, was jedoch den Nachteil des zusätzlichen Fertigungsschrittes für jeden Einzelmagneten mit sich bringt.

US- 3 474 073 beschreibt Lackzusammensetzungen als Korrosionsschutzlack für Magnete auf Basis einer Epoxidharzmischung, eines Härtebeschleunigers, eines epoxyfunktionellen Haftvermittlers auf Silanbasis und eines Lösemittels wobei die Epoxidharzmischung eines Epoxidharz mit einer Epoxidzahl von 2,4 bis 1,8 Eq/Kg, ein Epoxidharz mit einer Epoxidzahl von 6,3 Eq/Kg, Epoxycyclohexylethylmethoxysilan und Lösemittel enthält.

Es wurde versucht, die Erzeugung des Korrosionsschutzes sowie die Verklebung der Magnete in einem Verfahrensschritt durchzuführen. Dabei wurde jedoch festgestellt, dass die dort angeführten Lacke, die Anforderungen an manche Systeme nicht immer vollständig erfüllen können. So werden beispielsweise bei Verwendung von Standardlacken auf Phenolharzbasis, die zusätzlich Füllstoffe, wie z. B. Aluminium oder Zink, oder Korrosionsschutzpigmente enthalten, die notwendigen Isolationseigenschaften für segmentierte Systeme nicht erreicht. Hinzu kommt, dass es bei solchen Systemen bei langen Hochtemperaturauslagerungen zur Versprödungen kommt. Bei Standard-Epoxidharzlacken wurde gefunden, dass die Klebefestigkeit bei hohen Temperaturen nicht ausreichend ist.

Aufgabe der vorliegenden Erfindung ist es daher, eine Lackierung bereitzustellen, die die oben beschriebenen Nachteile nicht aufweist.

Eine weitere Aufgabe der vorliegenden Erfindung besteht darin, ein Verfahren bereitzustellen, dass es erlaubt, MagnetSysteme mit einer ausreichenden Klebefestigkeit, guten Isolationseigenschaften, einer guten Hochtemperaturbeständigkeit und einer ausgezeichneten Haftung der Lackierung herzustel-len, bei dem die Lackierung und der Korrosionsschutz in einem Verfahrensschritt durchgeführt werden.

Überraschenderweise wurden bei der Suche nach einem wirksamen Lack für das gleichzeitige Kleben und Schützen von Magnetteilen gefunden, dass eine Lackzusammensetzung auf Basis einer Epoxidharzmischung, eines Härtebeschleunigers, eines epoxyfunktionellen Haftvermittlers auf Silanbasis und eines Lösungsmittels die hohen Anforderungen an einen Korrosionsschutzlack für Seltenerd-Dauermagnete erfüllt. Voraussetzung dafür ist dass die Epoxidharzmischung 1 bis 95 Gew.-% mindestens eines festen Epoxidharzes mit einer Epoxidzahl bis maximal 2 Eq/kg, 1 bis 50 Gew.-% mindestens eines festen multifunktionellen Epoxidharzes mit einer Epoxidzahl > 4 Eq/kg und 5 bis 40 Gew.-% eines Phenol- und/oder Kresolnovolaks mit einem Schmelzpunkt > 30°C umfasst.

Neben dieser besonderen Epoxidharzmischung enthält der Korrosionsschutzlack einen Härtebeschleuniger, wobei vorzugsweise tertiäre Amine oder Imidazolderivate eingesetzt werden. Ein bevorzugter Härtebeschleuniger ist beispielsweise 2-Ethyl-4-methylimidazol. Um die gewünschte ausgezeichnete Haftung der Lackierung auf dem Dauermagnetwerkstoff zu gewährleisten, enthält die Lackzusammensetzung darüber hinaus einen epoxydfunktionellen Haftvermittler auf Silanbasis. Als besonders vorteilhaft haben sich dabei γ-Glycidyloxypropyltrimethoxysilan oder β-3,4-Epoxycyclohexyl)-ethyltrimethoxysilan erwiesen. Üblicherweise werden die Haftvermittler in einer Menge zwischen 0,1 - 5 Gew.-%, bevorzugt 1 - 3 Gew.-%, bezogen auf die Festharzmischung, eingesetzt.

Das Lösungsmittel für den Lack muss keine besonderen Anforderungen erfüllen, so können aliphatische und aromatische Kohlenwasserstoffe, Ether, Ester, Glykolether, Alkohole, Ketone und/oder Mischungen daraus eingesetzt werden. Die Lackierung der Bauteile selber erfolgt auf konventionelle Weise durch Streichen, Tauchen, Spritzen, Schleudern, Gießen oder sonstige Verfahren, wobei das Spritzverfahren sowohl im Durchlaufals auch im Schüttgutverfahren aufgrund der Geometrie der zu lackierenden Teile bevorzugt eingesetzt wird. Aus diesem Grunde ist es zweckmäßig, wenn der Feststoffanteil des Lackes nicht zu hoch ist und maximal 50 Gew.-%, bevorzugt zwischen 10 und 20 Gew. %, beträgt.

Bei einer vorteilhaften Ausführungsform der erfindungsgemäßen Lackzusammensetzung enthält die Epoxidharzmischung von 1 - 80 Gew.-% eines festen Epoxidharzes mit einer Epoxidzahl von 1-2 Eq/kg.

Eine besonders vorteilhafte Ausführungsform der Lackzusammensetzung enthält 40 - 60 Gew.% festes Epoxidharz mit einer Epoxidzahl von < 1 Eq/kg, 20 - 40 Gew.-% festes Epoxidharz mit einer Epoxidzahl 1 - 2 Eq/kg, 10 - 40 Gew.-% eines festen multifunkionellen Epoxidharzes mit der Epoxidzahl von > 4 Eq/kg und 10 - 20 Gew.-% eines Phenol- und/oder Kresolnovolaks. Dabei sind die festen Epoxidharze mit einer Epoxidzahl bis maximal 2 Eq/kg bevorzugt Epoxidharze auf Basis von Bisphenol-A und/oder Bisphenol-F.

Bei weiteren vorteilhaften Lackzusammensetzungen ist das multifunktionelle Epoxidharz mit einer Epoxidzahl > 4 Eq/kg ausgewählt aus der Gruppe umfassend Epoxyphenolnovolake, Epoxykresolnovolake und Triglycidylisocyanurat und/oder Mischungen daraus.

Um die Eigenschaften der Lackzusammensetzung als Korrosionsschutz zu verbessern, ist es vorteilhaft, wenn die Lackzusammensetzung Korrosionsschutzpigmente, wie z.B. Zinkphosphat, Zinkchromat oder Zinkhydroxyphosphit, enthält.

Eine weitere Optimierung der Lackzusammensetzung kann dadurch erreicht werden, dass zusätzliche Additive, wie z.B. lösliche Farbstoffe, Verlaufsmittel und Entschäumer, nichtmetallische Füllstoffe, wie z.B. Quarz, Glimmer und Talkum, dispergierbare Farbpigmente; wie z.B. Ruß, Rutil sowie Dispergierhilfen und/oder rheologische Additive und/oder Absetzhilfsstoffe, wie z. B. Bentonite oder Aerosile in der Lackzusammensetzung eingesetzt werden.

Der erfindungsgemäße Lack ist besonders geeignet für den Einsatz bei einem Verfahren zur Herstellung von Magnetsystemen, das die Schritte des Beschichtens von mindestens einem Magneten mit dem besagten Korrosionsschutzlack, das Trocknen der Lackschicht, das Zusammenfügen der mit Lack beschichteten Werkstücke und das Fixieren des so erhaltenen Magnetsystems in einem Einbrennerofen umfasst. Im Gegensatz zur konventionellen Technik wird in diesem Fall das Kleben des Magneten mit dem Korrosionsschutz kombiniert und sowohl Korrosionsschutz und Klebung des Magneten werden zusammen im Einbrennofen ausgehärtet.

Auf diese Weise gelingt es, Magnetsysteme herzustellen, die eine Mindestdruckfestigkeit von > 10 N/mm² und eine Dauertemperaturbeständigkeit von 150°C aufweisen. Die Schichtdicke der Lackschicht beträgt vorzugsweise zwischen 10 und 50 µm. Die Druckfestigkeiten der Magnetverklebung erreicht bei Raumtemperatur mehr als 25 N/mm² und beträgt selbst bei 130°C immer noch mehr als 5 N/mm².

Im Folgenden wird die Erfindung anhand von Beispielen ausführlich erläutert.

### Beispiel 1 (Herstellung der Lacklösung)

25 g eines Bisphenol-A-Festharzes mit einem Epoxidwert von 0,3 Eq/kg, 10 g eines Bisphenol-A-Harzes mit einem Epoxidwert von 1,5 Eq/kg, 8 g eines Epoxyphenolnovolakes mit einem Epoxidwert von 5,6 Eq/kg sowie 7 g eines Kresolnovolaks mit einem Schmelzpunkt von 120 °C werden in 200g eines Lösungsmittelgemisches aus drei Teilen Methylethylketon und einem Teil Ethanol gelöst. Zu dieser Lösung werden 0,25 g 2-Ethyl-4-methylemidazol und 0,5 g γ-Glycidyloxypropyltrimethoxysilan gegeben. Die so erhaltende Klarlacklösung wird für die weiteren Anwendungsbeispiele eingesetzt.

### Beispiel 2 (Herstellung der Magnetsysteme)

Der in Beispiel 1 hergestellte Lack wurde mit einer Spritzpistole auf Dauermagnetquader aus einer Neodym-Eisen-Bor-Legierung gesprüht. Die Magnetquader, die eine Abmessung von 50 x 12 x 5 mm hatten, wurden anschließend bei 50°C für 30 Minuten getrocknet. Die Schichtdicke des Lackes nach dem Trocknen betrug ca. 15 bis 25 µm. Jeweils acht der Quadermagnete wurden mit Hilfe einer Spannvorrichtung zu einem Block fixiert, wobei die Kontaktfläche 50 x 12 mm betrug. Das so gefertigte Magnetsystem wurde im Umluftofen für 3 Stunden bei 150°C ausgehärtet.

Die härtesten Magnetblöcke wurden anschließend einer Stromdurchgangsprüfung unterzogen, wobei der geklebte Block auf einer Seite durch Abschmirgeln vom Lack befreit und mit Hilfe einer Gleichstromquelle mit einer Spannung von 30 Volt beaufschlagt wurde. Auf diese Weise konnte festgestellt werden, dass alle Klebungen eine hervorragende isolierende Wirkung zeigen und keine Stromdurchgänge erlauben.

### Beispiel 3 (Autoklaventest)

Fünf der nach Beispiel 2 hergestellten Magnetblöcke wurden in einem Autoklaventest bei 130°C, 100 % Luftfeuchtigkeit und einem Druck von 2,7 bar einem Korrosionstest unterzogen. Selbst nach einer Prüfzeit von sieben Tagen (168 Stunden) wurden keine Korrosionsspuren entdeckt und es konnte auch keine Schichtdelamination beobachtet werden.

### Beispiel 4 (Salzsprühtest)

Fünf der nach Beispiel 2 hergestellten Magnetblöcke wurden in einem Salzsprühtest nach DIN 50021 unterzogen. Auch nach einer Prüfzeit von 240 Stunden waren keine Korrosionserscheinungen an den Magnetblöcken zu erkennen.

### Beispiel 5 (Schadgastest)

Fünf Magnetblöcke, die nach dem Verfahren im Beispiel 2 hergestellt worden waren, wurden einem Schadgastest entsprechend DIN 50018 unterzogen. Nach 21 Prüfzyklen konnten keine korrosiven Angriffe auf Lack oder Magnetmaterial festgestellt werden.

### Beispiel 6 (Temperaturbeständigkeit des Lackes)

Der nach Beispiel 1 hergestellte Lack wurde im ausgehärteten Zustand einer thermographimetrischen Analyse mit einer Aufheizrate von 5 K/min unterzogen. Als Ergebnis wurde ein Zersetzungspunkt von 410°C festgestellt, was bedeutet, dass der Lack für alle Hochtemperaturanwendungen bei NdFeB-Magneten eingesetzt werden kann. Die Obergrenze für Hochtemperaturanwendungen für den Werkstoff selber liegt bei maximal 210°C, da oberhalb dieser Temperatur mit dem Auftreten irreversibler Wärmeverluste gerechnet werden muss.

### Beispiel 7 (Klebefestigkeit)

Ein nach dem Verfahren in Beispiel 2 hergestellte Magnetplatte wurde einem Druckscherversuch ausgesetzt. Bei dem durchgeführten Versuch brach bei 15.000 N das Magnetmaterial, während die Klebung selber nicht beeinträchtigt wurde.

### Beispiel 8 (Druckscherversuche)

Mit einem nach Beispiel 1 hergestellten Klebelack wurden in Anlehnung an DIN 54451 Druckscherversuche vorgenommen. Dabei ergaben sich für die Magnet-Magnet-Verklebungen bei Raumtemperatur eine Druckscherfestigkeit von mehr als 25 N/mm². Selbst bei 130°C lag die Druckscherfestigkeit immer noch über 5 N/mm².

## Patentansprüche

1. Lackzusammensetzung als Korrosionsschutzlack für Seltenerd-Dauermagnete auf Basis einer Epoxidharzmischung, eines Härtebeschleunigers, eines epoxyfunktionellen Haftvermittlers auf Silanbasis und eines Lösungsmittels, wobei die Epoxidharzmischung
a) 1 bis 95 Gew.-% mindestens eines festen Epoxidharzes mit einer Epoxidzahl bis maximal 2 Eq/kg,
b) 1 bis 50 Gew.-% mindestens eines festen multifunktionellen Epoxidharzes mit einer Epoxidzahl > 4 Eq/kg und
c) 5 bis 40 Gew.-% eines Phenol- und/oder Kresolnovolaks mit einem Schmelzpunkt > 30 °C, vorzugsweise > 100 °C,
umfasst.

2. Lackzusammensetzung nach Anspruch 1,
wobei die Epoxidharzmischung 1 bis 80 Gew.-% eines festen Epoxidharzes mit einer Epoxidzahl < 1 Eq/kg und 1 bis 80 Gew.-% eines festen Epoxidharzes mit einer Epoxidzahl von 1 bis 2 Eq/kg umfasst.

3. Lackzusammensetzung nach Anspruch 1 oder 2,
wobei die Epoxidharzmischung
a) 40 bis 60 Gew.-% festes Epoxidharz mit einer Epoxidzahl < 1 Eq/kg;
b) 20 bis 40 Gew.-% festes Epoxidharz mit einer Epoxidzahl 1 bis 2 Eq/kg;
c) 10 bis 40 Gew.-% eines festen multifunktionellen Epoxidharzes mit einer Epoxidzahl von > 4 Eq/kg und
d) 10 bis 20 Gew.-% eines Phenol- und/oder Kresolnovolaks
umfasst.

4. Lackzusammensetzung nach einem der Ansprüche 1 bis 3, wobei das mindestens eine feste Epoxidharz mit einer Epoxidzahl bis maximal 2 Eq/kg ein Epoxidharz ist auf Basis von Bisphenol-A und/oder Bisphenol-F.

5. Lackzusammensetzung nach einem der Ansprüche 1 bis 4, wobei das mindestens eine multifunktionelle Epoxidharz mit einer Epoxidzahl > 4 ausgewählt ist aus der Gruppe umfassend Epoxyphenolnovolake, Epoxykresolnovolake, Triglycidylisocyanurat und/oder Gemische davon.

6. Lackzusammensetzung nach einem der Ansprüche 1 bis 5, wobei der Härtebeschleuniger tertiäre Amine und/oder Imidazolderivate, vorzugsweise 2-Ethyl-4-methylimidazol, umfasst.

7. Lackzusammensetzung nach einem der Ansprüche 1 bis 6, wobei der Anteil an epoxyfunktionellem Haftvermittler auf Silanbasis 0.1 bis 5 Gew.-%, vorzugsweise 1 bis 3 Gew.-%, bezogen auf die Festharzmischung, beträgt.

8. Lackzusammensetzung nach einem der Ansprüche 1 bis 7, wobei der epoxyfunktionelle Haftvermittler ausgewählt ist aus der Gruppe umfassend γ-Glycidyloxypropyltrimethoxysilan und β-(3,4-Epoxycyclohexyl)-ethyltrimethoxysilan.

9. Lackzusammensetzung nach einem der Ansprüche 1 bis 8, wobei das Lösungsmittel aliphatische und aromatische Kohlenwasserstoffe, Ether, Ester, Glykolether, Alkohole, Ketone und Mischungen daraus umfasst.

10. Lackzusammensetzung nach einem der Ansprüche 1 bis 9, wobei der Feststoffanteil der Lackzusammensetzung 1 bis 50 Gew.-%, vorzugsweise 10 bis 20 Gew.-%, beträgt.

11. Lackzusammensetzung nach einem der Ansprüche 1 bis 10, wobei die Lackzusammensetzung zusätzlich Korrosionsschutzpigmente, wie z.B. Zinkphosphat, Zinkchromat und Zinkhydroxyphosphit, umfasst.

12. Lackzusammensetzung nach einem der Ansprüche 1 bis 10, wobei, die Lackzusammensetzung zusätzliche Additive, wie z.B. lösliche Farbstoffe, Verlaufsmittel und Entschäumer, nichtmetallische Füllstoffe, wie z.B. Quarzmehl, Glimmer und Talkum, dispergierbare Farbpigmente, wie z.B. Ruß und Rutil, Dispergierhilfen und/oder rheologische Additive und Absetzhilfsstoffe, wie z.B. Bentonite oder Aerosile, enthält.

13. Verfahren zur Herstellung von Magnetsystemen umfassend die Schritte
a) Beschichten von mindestens einem Magneten mit einem Korrosionsschutzlack,
b) Trocknen der Lackschicht,
c) Zusammenfügen des mit Lack beschichteten Magneten mit einem weiteren beschichteten Magneten oder anderen Werkstücken zu einem Magnetsystem und
d) Fixierung des Magnetsystems in einem Einbrennofen,
wobei als Korrosionsschutzlack eine Lackzusammensetzung nach einem der Ansprüche 1 bis 12 eingesetzt wird.

14. Magnetsystem hergestellt nach dem Verfahren nach Anspruch 13, wobei das Magnetsystem eine Mindestdruckfestigkeit von 10 N/mm2, eine Dauertemperaturbeständigkeit von 150 °C und die Lackschicht eine Schichtdicke zwischen 10 und 50 µm aufweist und elektrisch isolierend ist.

## Claims

1. A paint composition comprising an anti-corrosion paint for rare earth permanent magnets based on an epoxide resin mixture, a setting accelerator, an epoxy functional, silane based adhesion promoter and a solvent, wherein the epoxide resin mixture includes.
a) 1 to 95wt. % of at least one solid epoxide resin with an epoxide index of up to at most 2 Eq/kg.
b) 1 to 50wt. % of at least one solid multi-functional epoxide resin with an epoxide index > 4 Eq/kg and
c) 5 to 40wt. % of a phenol and/or cresol novolak with a melting point > 30 °C, preferably > 100 °C.

2. A paint composition as claimed in Claim 1, wherein the epoxide resin mixture includes a solid epoxide resin with an epoxide index < 1 Eq/kg and 1 to 80wt. % of a solid epoxide resin with an epoxide index of 1 to 2 Eq/kg.

3. A paint composition as claimed in Claim 1 or 2, wherein the epoxide resin mixture includes
a) 40 to 60wt. % of a solid epoxide resin with an epoxide index < 1 Eq/kg;
b) 20 to 40wt. % solid epoxide resin with an expoxide index of 1 to 2 Eq/kg;
c) 10 to 40wt. % of a solid multi-functional epoxide resin with an epoxide index of > 4 Eq/kg and
d) 10 to 20wt. % of a phenol and/or cresol novolak.

4. A paint composition as claimed in Claims 1 to 3, wherein the at least one solid epoxide resin with an expoxide index of up to at most 2 Eq/kg is an epoxide resin based on bisphenol A and/or bisphenol F.

5. A paint composition as claimed in one of claims 1 to 4, wherein the at least one multi-functional epoxide resin with an expoxide index > 4 is selected from the group including epoxy phenol novolaks, epoxy cresol novolaks, triglycidyl isocyanurate and/or mixtures thereof.

6. A paint composition as claimed in one of claims 1 to 5, wherein the setting accelerator includes tertiary amines and/or imidazole derivates, preferably 2-ethyl-4-methylimidazole.

7. A paint composition as claimed one of claims 1 to 6, wherein the proportion of epoxyfunctional, sylane based adhesion promoter is 0.1 to 5wt. % preferably 1 to 3wt. %, with respect to the solid resin mixture.

8. A paint composition as claimed in Claims 1 to 7, wherein the epoxy functional adhesion promoter is selected from the group including γ - glycidyloxypropyltrimethoxysilane and β - (3, 4 - epoxycyclohexyl) - ethyltrimethoxysilane.

9. A paint composition as claimed in one of claims 1 to 8, wherein the solvent includes aliphatic and aromatic hydrocarbons, ethers, esters, glycol ethers, alcohols, ketones and mixtures thereof.

10. A paint composition as claimed in one of claims 1 to 9, wherein the solid material content of the paint composition is 1 to 50wt. %, preferably 10 to 20wt. %.

11. A paint composition as claimed in claims 1 to 10, wherein the paint composition additionally includes anti-corrosion pigments, such as zinc phosphate, zinc chromate and zinc hydroxy phosphite.

12. A paint composition as claimed in one of claims 1 to 10, wherein the paint composition additionally contains additives, such as soluble dyes, viscosity reducing agents and defoamers, non-metallic fillers, such as quartz dust, mica and talcum, dispersible coloured pigments, such as carbon black and rutile, dispersing aids and/or rheological additives and sedimentation adjuvants, such as bentonite or silica.

13. A method of producing magnet systems including the steps of
a) coating at least one magnet with an anti-corrosion paint,
b) drying the paint layer,
c) joining the magnet coated with paint to a further coated magnet or other workpieces to form a magnet system and
d) fixing the magnet system in a burning-in furnace,
wherein a paint composition as claimed in one of claims 1 to 12 is used as the anti-corrosion paint.

14. A magnet system produced in accordance with the method as claimed in Claim 13, wherein the magnet system has a minimum compression strength of 10 N/mm2 and a long term temperature resistance of 150°C and the paint layer has a thickness between 10 and 50 µm and is electrically insulating.

## Revendications

1. Composition pour vernis de protection contre la corrosion destiné à des aimants permanents à base de terres rares, à base d'un mélange de résines époxydes, d'un accélérateur de durcissement, d'un agent d'accrochage à fonction époxy à base de silanes, ainsi que d'un solvant, le mélange de résines époxydes comprenant
a) entre 1 % et 95 % en poids d'au moins une résine époxyde solide ayant un taux d'époxydation allant au maximum jusqu'à 2 Eq/kg,
b) de 1 % à 50 % en poids d'au moins une résine époxyde multifonctionnelle solide ayant un taux d'époxydation supérieur à 4 Eq/kg et
c) de 5 % à 40 % en poids d'une novolaque de phénol et/ou de crésol ayant un point de fusion supérieur à 30°C, de préférence supérieur à 100°C.

2. Composition pour vernis selon la revendication 1,
dans laquelle le mélange de résines époxydes représente entre 1 et 80% en poids d'une résine époxyde solide ayant un taux d'époxydation inférieur à 1 Eq/kg et de 1 % à 80 % en poids d'une résine époxyde solide ayant un taux d'époxydation compris entre 1 et 2 Eq/kg.

3. Composition pour vernis selon la revendication 1 ou 2,
selon laquelle
le mélange de résines époxydes comprend
a) entre 40 % et 60 % en poids d'une résine époxyde solide ayant un taux d'époxydation inférieur à 1 Eq/kg,
b) entre 20 % et 40 % en poids de résines époxydes solides ayant un taux d'époxydation compris entre 1 et 2 Eq/kg,
c) entre 10 % et 40 % en poids d'une résine époxyde multifonctionnelle, solide ayant un taux d'époxydation supérieur à 4 Eq/kg, et
d) de 10 % à 20% en poids d'une novolaque de phénol et/ou de crésol.

4. Composition pour vernis selon l'une des revendications 1 à 3,
selon laquelle
la (les) résine(s) époxyde(s) solide(s) ayant un indice d'époxydation allant au maximum jusqu'à 2 Eq/kg est (sont) résine(s) une (des) époxyde(s) à base de bisphénol A et/ ou de bisphénol F.

5. Composition pour vernis selon l'une des revendications 1 à 4,
selon laquelle
on choisit la (les) résine(s) époxyde(s) multifonctionnelle(s) ayant un indice d'époxydation supérieur à 4 dans le groupe comprenant les novolaques d'époxyphénol, les novolaques d'époxycrésol, l'isiocyanurate de triglycidyle et/ou des mélanges de ceux-ci.

6. Composition pour vernis selon l'une des revendications 1 à 5,
selon laquelle
l'accélérateur de durcissement est une amine tertiaire et/ou un dérivé d'imidazol, de préférence le 2-éthyl-4-méthylimidazol.

7. Composition pour vernis selon l'une des revendications 1 à 6,
selon laquelle
la teneur en agent d'accrochage à fonction époxy à base de silane représente entre 0,1 % et 5 % en poids, de préférence entre 1 % et 3 % en poids par rapport au mélange de résines solides.

8. Composition pour vernis selon l'une des revendications 1 à 7,
selon laquelle
l'agent d'accrochage à fonction époxy est choisi dans le groupe comprenant le γ glycidylox γ propyltriméthoxysilane et le β (3,4-époxycyclohexyl)-éthyltriméthoxysilane.

9. Composition pour vernis selon l'une des revendications 1 à 8,
selon laquelle
le solvant comprend des hydrocarbures aliphatiques et aromatiques, des éthers, esters, glycoéthers, alcools, cétones, et leurs mélanges.

10. Composition pour vernis selon l'une des revendications 1 à 9,
selon laquelle
la teneur en matières solides de la composition pour vernis représente entre 1 % et 50 % en poids et, de préférence entre 10 % et 20 % en poids.

11. Composition pour vernis selon l'une des revendications 1 à 10,
selon laquelle
la composition contient en outre des pigments de protection contre la corrosion tels que par exemple du phosphate de zinc, du chromate de zinc et de l'hydroxyphosphite de zinc.

12. Composition pour vernis selon l'une des revendications 1 à 10,
selon laquelle
la composition pour vernis contient des additifs supplémentaires tels que par exemple des colorants solubles, des liquéfiants et des démoussants, des charges non métalliques telles que par exemple de la farine de quartz, du mica et du talc, des pigments colorés pouvant être dispersés tels que par exemple du noir de fumée et du rutile, des agents de dispersion et/ou des additifs rhéologiques ainsi que des agents de décantation tels que de la bentonite et des aérosiles.

13. Procédé de fabrication de système magnétique comprenant les étapes suivantes :
a) on applique un revêtement sur au moins un aimant avec un vernis de protection anticorrosion,
b) on fait sécher la couche de vernis,
c) on assemble l'aimant revêtu du vernis à un autre aimant revêtu ou à d'autres pièces pour former un système magnétique et
d) on fixe le système magnétique dans un four de cuisson,
étant donné que comme vernis de protection contre la corrosion, on utilise une composition de vernis selon l'une des revendications 1 à 12.

14. Système magnétique fabriqué selon le procédé de la revendication 13, selon lequel le système magnétique a une résistance minimale à la pression de 10 N/mm², une résistance permanente à la température de 150° et la couche de vernis a une épaisseur de vernis comprise entre 10 µm et 50 µm et électriquement isolante.
